# EUROPÄISCHE PATENTSCHRIFT

(11) **EP 1 491 080 B1**
(45) Veröffentlichungstag und Bekanntmachung des Hinweises auf die Patenterteilung: **15.08.2012**
(21) Anmeldenummer: 04014773.8
(22) Anmeldetag: 24.06.2004
(51) Int. Cl.: A01B 21/08, A01B 35/16

(54) **Bodenbearbeitungsgerät**
Soil cultivating device
Appareil de travail du sol

(30) Priorität: 24.06.2003 DE 20309687 U
(43) Veröffentlichungstag der Anmeldung: 29.12.2004
(73) Patentinhaber: Hendlmeier, Konrad, 93107 Untersanding (DE)
(72) Erfinder: Hendlmeier, Konrad, 93107 Untersanding (DE)
(74) Vertreter: Graf Glück Habersack Kritzenberger

(56) Entgegenhaltungen:
- EP-A- 0 796 553
- DE-U- 20 109 249
- DE-U- 20 304 258
- FR-A- 2 813 749
- GB-A- 2 184 332
- US-A- 3 080 932

## Beschreibung

Die Erfindung betrifft ein Bodenbearbeitungsgerät nach dem Oberbegriff des Anspruches 1.

Aus DE 201 09 249.2 U1 ist ein Bodenbearbeitungsgerät der gattungsgemäßen Art bekannt, dessen Scharelemente weitgehend offene Scheibenflächen mit Ausnehmungen zum Hindurchtreten des durch das Scharelement abgehobenen Erdreiches aufweisen, die Vorderkante des Scharelementes in Fahrtrichtung mit dem zu bearbeitenden Boden rotierend in Eingriff steht, und das Scharelement im Winkel zur Fahrtrichtung angestellt angeordnet ist.

Eine derartige Anordnung arbeitet einwandfrei, wenn die einmal eingestellte Arbeitstiefe beibehalten werden kann, d. h., wenn keine Hindernisse in dem zu bearbeitenden Boden vorhanden sind, insbesondere Steine oder entsprechende Unstetigkeiten, die ein Ausheben und/oder ein Beschädigen der Werkzeuge hervorrufen bzw. wenn keine Pflanzenteile oder kein Erdreich sich an den Scharelementen anlegen.

Des Weiteren offenbart die Druckschrift FR-A 2 813 749 einen Präzisionsschläpflug mit eingebauten Säelementen mit, im Winkel zur Fahrtrichtung angestellten und einzeln federnd gelagerten Scheibenscharelementen, die als vollflächige Tellerelemente ausgebildet sind. Durch die konkave Ausbildung der Tellerelemente gleitet das Erdreich an diesen ab, so dass keine Verstopfung der Scheibenscharelemente erfolgt.

Aus der Druckschrift EP-A 0 796 553 ist ein Sägerät mit vollflächigen Scharscheiben, die jeweils gegeneinander gerichtet zu Doppeleinheiten zusammengefasst sind, die höhenbeweglich und nachgiebig am Rahmen befestigt sind und die an einem gemeinsamen Haltearm angeordnet sind. Zur nachgiebigen Befestigung sind Federn vorgesehen, die derart dimensioniert sind, dass erst bei drohender Beschädigung der Scharscheiben ein Ausweichen ermöglicht wird.

Eine entsprechende Anordnung aus Scheibenscharen mit vollflächigen Scharscheiben ergibt sich aus der Druckschrift DE 203 04 258 U.

Gegenstand der GB-A-2184332 sind ebenfalls vollflächige Scharscheiben, die als Doppeleinheiten an einem gemeinsamen Haltearm angeordnet sind, und die zum Einebnen der durch die Zinken gezogenen Furchen bestimmt sind.

Eine Bodenbearbeitungsmaschine nach der Druckschrift US-A-3,080,932 zeigt ein einzeines Ringschneidenelement, das im Wesentliche der Druckschrift DE 201 09 249 U1 entspricht.

Ausgehend hiervon ist es Aufgabe der Erfindung, ein gattungsgemäßes Gerät so auszubilden, dass beim Auftreffen eines Ringschneidenelementes auf ein Hindernis das jeweils beanspruchte Element nach oben auslenken und damit dem Hindernis ausweichen sowie Beschädigungen vermeiden kann, und dabei die gleichzeitig eine Selbstreinigung der Ringschneidenelemente erfolgt.

Gemäß der Erfindung wird dies dadurch erreicht, dass das Bodenbearbeitungsgerät in der im Anspruch 1 angegebenen Weise ausgebildet ist. Weitere Ausgestaltungen der Erfindung sind Gegenstand der Unteransprüche.

Die Arbeitstiefe der rotierenden Ringschneiden, die über einen Tragarm mit dem Geräterahmen befestigt ist, wird mit Hilfe eines Stützrades, einer Stützkufe oder dergleichen auf dem Boden geführten Stützanordnung eingestellt. Die Eindringtiefe wird von Hand oder über Servoantrieb durch Anheben bzw. Absenken der Stützanordnung gegenüber dem Tragarm und dem Geräterahmen verändert. Hierzu kann der Tragarm mit Stützvorrichtung und Ringschneidenelementen mit dem Rahmen gelenkig verbunden sein, oder der die Ringschneidenelementen aufnehmende Abschnitt kann innerhalb des Tragarmes gelenkig ausgeführt sein. Bei einer derartigen Ausführung ist pro Ringschneidenelement eine Stützanordnung erforderlich.

Bei einer weiteren Ausführungsform der Erfindung ist der Träger der Stützanordnung direkt mit dem Geräterahmen höhenverstellbar befestigt, so dass die Stützanordnung den Rahmen anhebt oder absenkt, wenn eine Verstellung vorgenommen wird. Die Anzahl der Ringschneidenelemente ist dabei unabhängig von der Anzahl der Stützanordnungen.

Bei einer abgeänderten Ausführungsform der Erfindung werden die beiden vorstehend beschriebenen Ausführungsformen miteinander kombiniert, und es sind zwei Stützanordnungen vorgesehen, deren eine mit dem Geräterahmen und deren andere mit dem Tragrahmen für die Ringschneidenelemente verbunden ist. Damit ist eine Einstellung der Ringschneidenelemente sowohl individuell als auch gemeinsam möglich.

Mit einer weiteren Variante der Erfindung wird vorgeschlagen, die Ringschneidenelemente am Tragrahmen höhenverstellbar, z. B. mittels Spindelantrieb, zu befestigen, und den Tragarm bzw. Tragrahmen am Geräterahmen auslenkbar zu befestigen, Bei dieser Ausführungsform kann auf den Einsatz eines Stützrades oder dergleichen verzichtet werden.

Der Tragrahmen bzw. Tragarm zur Aufnahme der Ringschneidenelemente kann in weiterer Ausgestaltung der Erfindung elastisch nachgiebig in Form einer Federanordnung ausgeführt sein, die mit einem starren Teil des Tragarmes bzw. der Tragarmnabe und dem Geräterahmen eingeschaltet ist. Beispielsweise kann eine solche Federanordnung eine Blattfeder, eine Zug- oder Druckfeder, eine Feder in Form von Gummiblöcken bzw. Gummipuffern oder dergleichen sein. Die Federanordnung hat hierbei die Aufgabe, den elastisch nachgiebigen Tragarm mit den Ringschneidenelementen beim Auftreffen auf ein Hindernis soweit auszulenken, dass das Hindernis überfahren werden kann, wobei ein Ausweichen nach oben oder auch nach der Seite erreicht werden kann.

Während bei bekannten Scheibeneggen die Bodenbearbeitung in schmalen, kleinen Streifen erfolgt, da die Erde außen an dem jeweiligen Scheibenschar vorbei bewegt und abgelegt werden muss, erfolgt die Bodenbearbeitung mit Hilfe der Ringschneidenelemente ganzflächig, da der Erdstrom völlig frei (mit Ausnahme der Speichen) und vollständig durch den offenen Ring hindurch bewegt und hinter dem Ring gekrümelt abgelegt wird. Es wird somit eine ganzflächige Durchtrennung des Bodens erreicht, ohne dass durch Scharstiele Gräben oder Furchen gehäufelt werden. Aufgrund der gleichförmigen Bodenbearbeitung sind auch Vorrichtungen zum Einebnen der Erdreichoberfläche überflüssig.

Nachstehend wird die Erfindung in Verbindung mit der Zeichnung anhand Ausführungsbeispielen erläutert. Es zeigt:
- Fig. 1: eine erste Ausführungsform eines Bodengerätes in schematischer Seitenansicht, die nicht unter die Erfindung fällt,
- Fig. 2: eine zweite Ausführungsform des Bodenbearbeitungsgerätes, die nicht unter die Erfindung fällt,
- Fig. 3: eine dritte Ausführungsform der Bodenbearbeitungsvorrichtung, die nicht unter die Erfindung fällt,
- Fig. 4: eine vierte Ausführungsform der, die nicht unter die Erfindung fällt,
- Fig. 5: eine schematische Darstellung einer Federanordnung zwischen Geräterahmen und Tragrahmen,
- Fig. 6: eine abgeänderte Ausführungsform der Erfindung gegenüber Figur 5,
- Fig. 7: eine dritte Ausführungsform einer Federanordnung nach der Erfindung und
- Fig. 8: eine Darstellung der grundsätzlichen Arbeitsweise einer Ringschneidenvorrichtung nach der Erfindung im Einsatz, in perspektivischer Ansicht.

Der Geräterahmen des Bodenbearbeitungsgerätes ist insgesamt mit 1 bezeichnet. Am Querträger 2 des Geräterahmens 1 ist der Tragrahmen 3 für die Ringschneidenelemente 5 befestigt, vorzugsweise verschweißt. Das freie Ende des Tragrahmens 3 nimmt die Nabe 4 der rotierenden Ringschneidenelemente 5 auf. Die Schneide selbst ist mit 6 bezeichnet und ist konisch ausgebildet, d. h. sie hat in Fahrtrichtung und auf der Vorderseite einen größeren Durchmesser als auf der Rückseite. Der Tragrahmen 3, der die Ringschneidenelemente 5 trägt, nimmt einen Stützträger 7 auf, an dessen unterem Ende die Nabe 8 eines Stützrades 9 befestigt ist. Mit einer Verstellvorrichtung 10 ist das Stützrad 9 höhenverstellbar ausgeführt, so dass die Einstelltiefe der Ringschneidenelemente wählbar ist. Am Befestigungsende des Tragrahmens 3 mit dem Querträger 2 des Rahmens 1 ist mit 11 eine Gelenkverbindung angedeutet, so dass bei einem Auftreffen der Ringschneidenelemente 5 auf ein Hindernis H die Ringschneidenelemente 5 mit dem Tragrahmen angehoben und um den Drehpunkt 11 geschwenkt werden, damit die Ringschneidenelemente 5 dem Hindernis H ausweichen kann. Eine alternative Gelenkstelle für den Tragrahmen 3 mit Ringschneidenelementen 5 ist mit 12 angedeutet; bei dieser Ausführungsform wird nur ein Teil des Tragrahmens 3 um die Drehstelle 12 verschwenkt, wie mit Doppelpfeil 13 angedeutet.

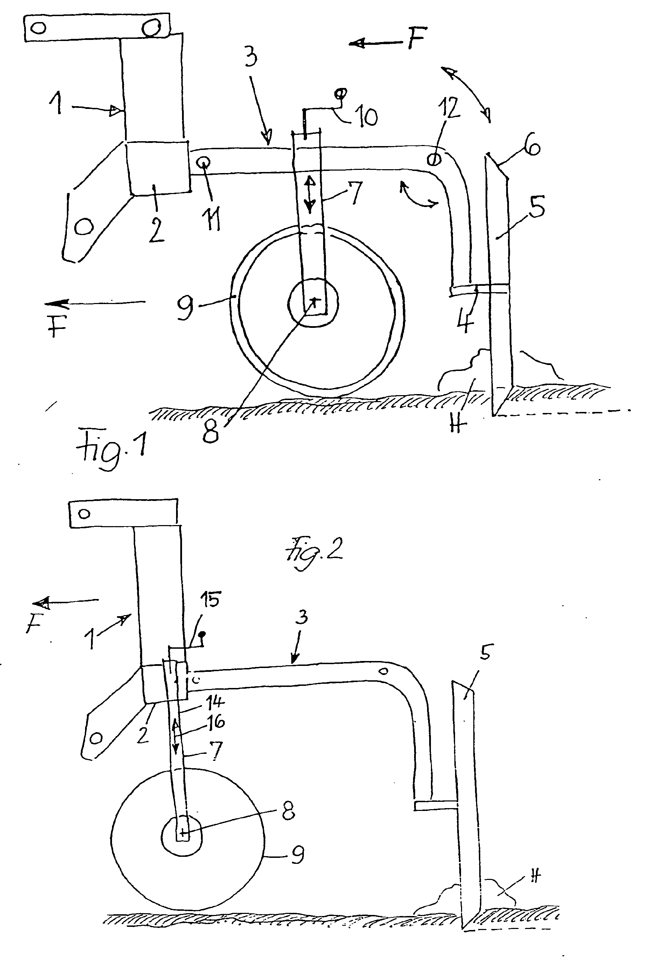

Bei der Ausführungsform nach Figur 2 ist der Stützträger 7 zur Aufnahme des Stützrades 9 über die Nabe 8 am oberen Ende 14 in dem Querträger 2 des Grundrahmens 1 festgelegt und über eine Einstellvorrichtung 15 von Hand oder einen Servoantrieb, z. B. eine Hydraulik-Stellvorrichtung höhenverstellbar angeordnet, wie mit Doppelpfeil 16 dargestellt.

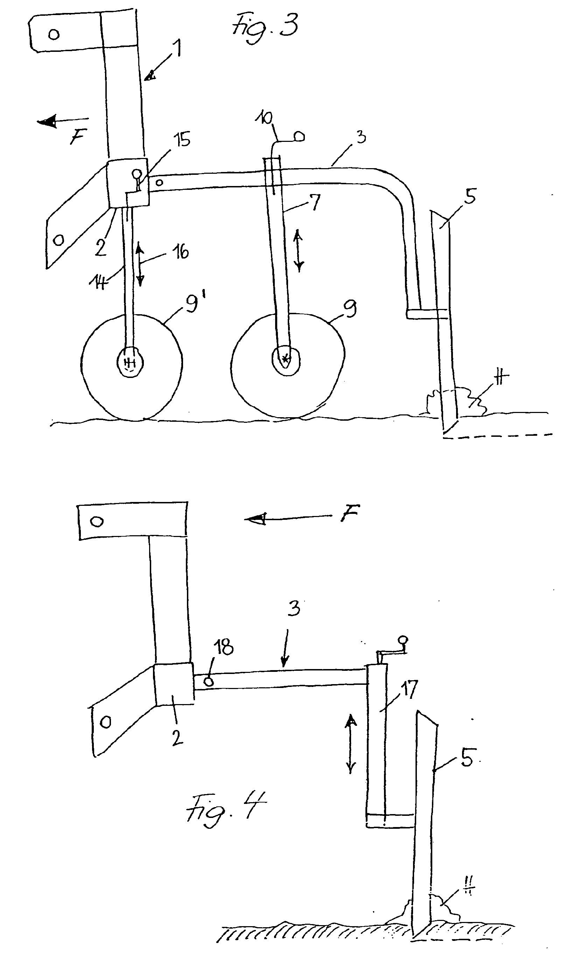

Die schematische Darstellung nach Figur 3 zeigt eine Kombination der Anordnungen nach Figur 1 und Figur 2 in einem Gerät. Eine derartige Ausführungsform hat den Vorteil, dass die rotierenden Ringschneidenelemente 5 ein und desselben Gerätes individuell verstellbar sind, während mit Hilfe der Anordnung 14 - 16 der gesamte Tragrahmen mit der Gesamtheit der Ringschneidenelemente 5 gemeinsam verstellt werden kann.

In Figur 4 ist eine Verstellung der Traganordnung 3 gezeigt, bei der ein Teil 17 des Tragrahmens 3 Bestandteil der Verstellvorrichtung 10, die ebenfalls z.B. mechanisch oder hydraulisch verstellt werden kann. Mit 18 ist dabei die gelenkige Lagerung des Tragarmes 3 am Querträger 2 bezeichnet.

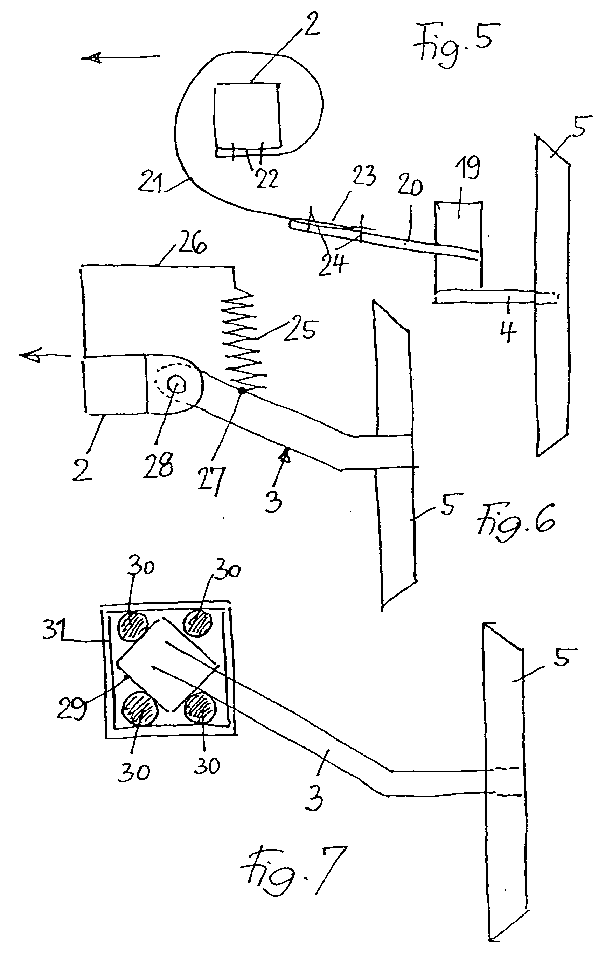

Figur 5 zeigt eine Scharelementanordnung mit federnd nachgiebiger auslenkbarer Befestigung mit dem Querträger des Grundrahmens. Jedes Ringschneidenelement 5 ist über die Nabe 4 bzw. einen Achsstummelund einen Trägerblock 19, an dem ein Befestigungsträger 20 angebracht ist, mit Hilfe einer Blattfeder 21am Geräterahmen 2 festgelegt. Die Blattfeder 21 ist mit ihrem einen Ende 22 an dem Querträger 2 des Rahmens fest verbunden, während das entgegengesetzte Ende 23 der Blattfeder 21 mit dem Trägerelement 20 des Ringschneidenelementes 5 verbunden ist, z. B. mittels Schrauben 24.

Anstelle einer Blattfeder 21 kann die Federverbindung mit Hilfe einer Schraubenfeder, 25, eines Hydraulikzylinders, eines Gummiblocks oder dergleichen zwischen Querträger 2 des Rahmens 1 und Tragarm 3 eingeschaltet sein. Die Traganordnung 3 für die Ringscheibenelemente 5 ist bei 28 am Querträger gelenkig befestigt.

Bei der Darstellung nach Figur 7 ist das freie Ende der Traganordnung 3 für die Ringschneidenelemente 5 mit dem Querträger 2 des Rahmens 1 befestigt, und den Seitenflächen 29 ist jeweils ein Federblock bzw. Gummiblock 30 zugeordnet, wobei die Blöcke 30 in einem Gehäuse 31 angeordnet und dort positioniert sind.

Bei den vorstehend dargestellten Figuren ist das Ringschneidenelement in einer Ebene rechtwinklig zur Fahrtrichtung schematisch gezeichnet. In der Praxis ist die Ringschneidenebene jedoch im Winkel zur Längsachse, also schräg angestellt, damit ein einwandfreier Schnitt erzielt wird. Der Winkel der Umfangs-Schneidenfläche 6 zur Längsachse (Konus) ist dabei erheblich größer als bei herkömmlichen Scheibenscharen, so dass eine entscheidend verbesserte Bearbeitung des Bodens erreicht wird. Durch die gelenkige und federnde Aufhängung der Ringschneidenelemente 5 treten an den Ringschneidenelementen starke Vibrationen auf, die zur Folge haben, dass Pflanzenteile, Erdreich und dergl., die sich an den Schneiden und an den Speichen der Ringschneidenelementen 5 anlegen, weitgehend selbsttätig befreit werden.

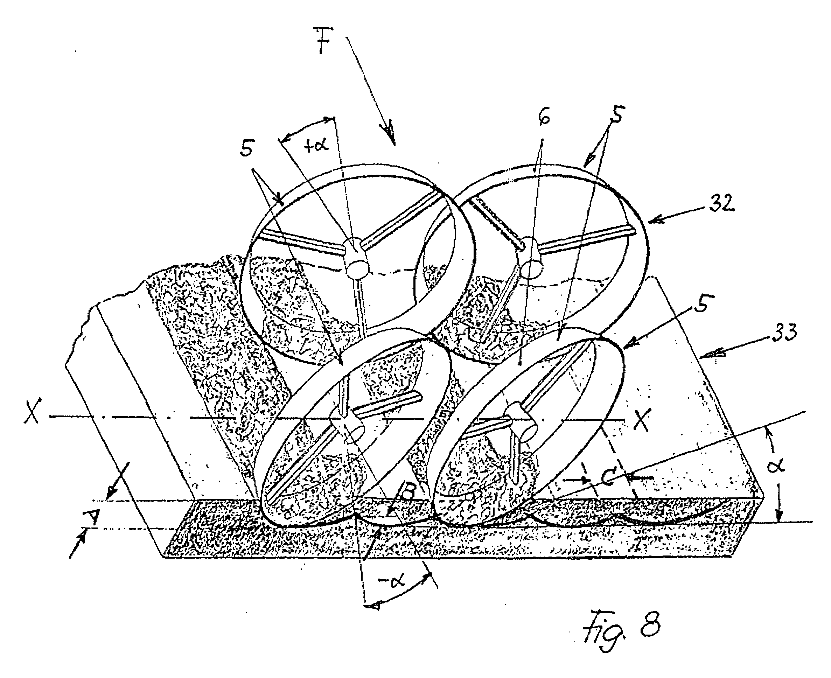

In Figur 8 sind die Ringschneidenelemente einer jeden Reihe im gleichen Winkel zur Querachse X-X und parallel zueinander dargestellt. Das Bodenprofil ist mit B, die Arbeitstiefe mit A und der Überschnitt mit C bezeichnet. Das durch den Schneidumfang gelöste Erdreich wird durch die Öffnung der Ringschneidenelemente hindurch abgelegt und der Boden ganzflächig durchtrennt. Dies steht im Gegensatz zu der Arbeitsweise einer Scheibenegge, die kleine, bearbeitete Streifen hinterläßt, da die von der geschlossenen Scheibe gelöste Erde nach Art eines Schars um die Scheibenumfangskante gewendet wird. Die Schnittbreite der Ringschneidenelemente pro Einheit ist im Falle der Erfindung erheblich größer als die vergleichbarer Scheibenschare, so dass bei gleicher Arbeitsbreite der Maschine die Anzahl der erforderlichen Ringschneidenelemente (im Vergleich zu einer Scheibenegge) wesentlich geringer ist. Bei der Ausführungsform nach Figur 8 sind die Ringscheibenelemente zweier benachbarter Reihen 32, 33 in gleich großen, aber entgegengesetzt gerichteten Winkeln + α, -α zur Fahrtrichtung angeordnet.

## Patentansprüche

1. Bodenbearbeitungsgerät mit scheibenartigen, als Ringschneidenelemente (5) ausgebildeten Scharelementen, die im Winkel (α) zur Fahrtrichtung (F) angestellt sind, deren Vorderkanten (6') in Fahrtrichtung (F) mit dem zu bearbeitenden Boden rotierend in Schneideingriff stehen, und die das gelöste und abgehobene Erdreich ganzflächig durch die von Ringschneidenspeichen gebildeten Ausnehmungen hindurchführen, **dadurch gekennzeichnet, dass** die Ringschneidenelemente (5) in parallelen Reihen in Fahrtrichtung (F) hintereinander am Geräterahmen (1, 2, 3) federnd nachgiebig (21, 25, 30) und auslenkbar (12, 28) befestigt sind, wobei die gelenkige und federnde Aufhängung der Ringschneidenelemente (5) so erfolgt, dass an den Ringschneidenelementen (5) starke Vibrationen auftreten, und
dass jeweils zwei aufeinanderfolgende Reihen (32, 33) von Ringschneidenelementen (5) in zueinander entgegengesetzten Winkeln (+α, -α) zur Fahrtrichtung (F) angestellt sind.

2. Bodenbearbeitungsgerät nach Anspruch 1, **dadurch gekennzeichnet, dass** der die Ringschneidenelemente (5) aufnehmende Tragrahmen (3) in einer höhenverstellbaren Stützanordnung (7, 8, 9) aufgenommen ist und der Tragrahmen (3) mit dem Geräterahmen (1) gelenkig (11 ) verbunden ist, und dass eine weitere höhenverstellbare Stützanordnung (14, 9') an dem Geräterahmen vorgesehen ist.

3. Bodenbearbeitungsgerät nach Anspruch 1, **dadurch gekennzeichnet, dass** der Tragarm (3) für das Ringschneidenelement (5) schwenkbar um eine Gelenkstelle (28) und federnd nachgiebig (21, 25, 30) angeordnet ist.

4. Bodenbearbeitungsgerät nach einem der Ansprüche 1 bis 3, **dadurch gekennzeichnet, dass** die federnde Nachgiebigkeit der Aufhängung der Ringschneideelemente (5) durch eine Blattfeder (21), eine Schraubenfeder, einen Gummipuffer, einen Gummiblock oder durch einen Hydraulikzylinder erzielt wird.

## Claims

1. Ground cultivator with disc-like share elements which are designed as ring cutter elements (5) which are set up at an angle (α) to the drive direction (F) and whose leading edges (6') in the drive direction (F) are in rotating cutting engagement with the earth which is to be cultivated, and which move the loosened and lifted soil with the entire surface area through the recesses which are formed by the ring cutter spokes, **characterised in that** the ring cutter elements (5) are fixed on the machine frame (1, 2, 3) in parallel rows one behind the other in the drive direction (F) resiliently pliable (21, 25, 30) and deflectable (12, 28) wherein the articulated and resilient suspension mounting of the ring cutter elements (5) is undertaken so that severe vibrations appear on the ring cutter elements (5) and that two successive rows (32, 33) of ring cutter elements (5) are set up at mutually opposing angles (+α, -α) to the drive direction.

2. Ground cultivator according to claim 1 **characterised in that** the support frame (3) holding the ring cutter elements (5) is mounted in a vertically adjustable supporting assembly (7, 8, 9) and the support frame (3) is connected for articulated movement to the machine frame (1) and that a further vertically adjustable supporting assembly (14, 9') is provided on the machine frame.

3. Ground cultivator according to claim 1 **characterised in that** the support arm (3) for the ring cutter element (5) is mounted resiliently pliable (21, 25, 30) and capable of swivelling about an articulation point (28).

4. Ground cultivator according to one of claims 1 to 3 **characterised in that** the resilient pliability of the suspension mounting of the ring cutter elements (5) is achieved by a leaf spring (21), a coil spring, a rubber buffer, a rubber block or by a hydraulic cylinder.

## Revendications

1. Appareil de travail du sol avec des éléments de soc de type disque, réalisés comme des éléments à lames circulaires (5), qui sont mis en place en angle (α) par rapport au sens de la marche (F), dont les arêtes avant (6') sont en engagement de coupe rotative dans le sens de la marche (F) avec le sol à travailler, et qui guident la terre détachée et décollée au travers des évidements formés par des rayons de lames circulaires sur toute la surface, **caractérisé en ce que** les éléments à lames circulaires (5) sont fixés en rangées parallèles dans le sens de la marche (F) les uns derrière les autres sur le cadre de l'appareil (1, 2, 3) de manière flexible et élastique (21, 25, 30) et déviable (12, 28), sachant que la suspension articulée et à ressorts des éléments à lames circulaires (5) est effectuée de sorte que de fortes vibrations se produisent sur les éléments à lames circulaires (5), et
**en ce que** respectivement deux rangées successives (32, 33) d'éléments à lames circulaires (5) sont mises en place dans des angles opposés (+α, -α) par rapport au sens de la marche (F).

2. Appareil de travail du sol selon la revendication 1, **caractérisé en ce que** le cadre porteur (3) recevant les éléments à lames circulaires (5) est reçu dans un ensemble d'appui (7, 8, 9) réglable en hauteur et le cadre porteur (3) est relié de manière articulée (11) au cadre de l'appareil (1) et **en ce qu'**un autre ensemble d'appui réglable en hauteur (14, 9') est prévu sur le cadre de l'appareil.

3. Appareil de travail du sol selon la revendication 1, **caractérisé en ce que** le bras porteur (3) pour l'élément à lames circulaires (5) est disposé de manière à pouvoir pivoter autour d'un point d'articulation (28) et de manière flexible et élastique (21, 25, 30).

4. Appareil de travail du sol selon l'une quelconque des revendications 1 à 3, **caractérisé en ce que** la flexibilité élastique de la suspension des éléments à lames circulaires (5) est obtenue par un ressort à lames (21), un ressort cylindrique, un tampon en caoutchouc, un bloc de caoutchouc ou un vérin hydraulique.
